# EUROPEAN PATENT APPLICATION

(11) **EP 4 617 991 A1**
(43) Date of publication of application: **17.09.2025**
(21) Application number: 23888380.5
(22) Date of filing: 28.09.2023
(51) Int. Cl.: G06Q 50/06, B60L 15/20, B60L 53/12, B60L 53/62, G01C 21/36, G16Y 10/40, G16Y 20/20, G16Y 20/30, H02J 7/00

(54) **SERVER, POWER SUPPLY SYSTEM, AND POWER PRICE SETTING METHOD**

(30) Priority: 11.11.2022 JP 2022181239
(71) Applicant: TOYOTA JIDOSHA KABUSHIKI KAISHA, Toyota-shi Aichi 471-8571 (JP); DENSO CORPORATION, Kariya-shi, Aichi 448-8661 (JP)
(72) Inventor: HASHIMOTO, Toshiya, Toyota-shi, Aichi 471-8571 (JP); KIMURA, Kazutaka, Toyota-shi, Aichi 471-8571 (JP); HASHIMOTO, Makoto, Toyota-shi, Aichi 471-8571 (JP); KANESAKI, Masaki, Kariya-shi, Aichi 448-8661 (JP); TANI, Keisuke, Kariya-shi, Aichi 448-8661 (JP); YAMAGUCHI, Nobuhisa, Kariya-shi, Aichi 448-8661 (JP); OBAYASHI, Kazuyoshi, Kariya-shi, Aichi 448-8661 (JP); TAKEMURA, Yuichi, Kariya-shi, Aichi 448-8661 (JP)
(74) Representative: D Young & Co LLP
(86) International application number: PCT/JP2023/035427
(87) International publication number: WO 2024/101027

(57) **Abstract**

A server communicating with a plurality of power supply devices 2 supplying a power to a vehicle 3 and a plurality of the vehicles includes: a scheduled power calculation unit 134 that calculates a value of a power supply parameter that changes in relation to a scheduled supply power amount in each of the power supply devices based on a power supply reservation from each of the vehicles to each of the power supply devices; a price setting unit 135 that sets a power price in power supply by each of the power supply devices based on the value of the power supply parameter in the power supply device; and a price notification unit 131 that notifies the vehicle of the set power price.

## Description

### Technical Field

The present disclosure relates to a server, a power supply system, and a power price setting method.

### Background Art

It has been proposed to charge a user who has charged an electric vehicle (including BEV, PHEV, HEV, etc.) using a charging facility with a charging fee that is discounted according to a use situation of the charging facility (for example, JP 2017-27634 A).

### Summary of Invention

In JP 2017-27634 A, a travel section and a period to be discounted are set in advance, and when a vehicle uses a charging facility in the set travel section within the set period, the charging fee is discounted. However, in JP 2017-27634 A, there is a case where it is not always possible to set the power price to a price reflecting an actual power demand.

In view of the above problems, an object of the present disclosure is to enable setting of a power price to a price reflecting an actual power demand.

The gist of the present disclosure is as follows:
(1) A server communicating with a plurality of power supply devices supplying a power to a vehicle and a plurality of the vehicles, the server comprising:
   a scheduled power calculation unit that calculates a value of a power supply parameter that changes in relation to a scheduled supply power amount in each of the power supply devices based on a power supply reservation from each of the vehicles to each of the power supply devices;
   a price setting unit that sets a power price in power supply by each of the power supply devices based on the value of the power supply parameter in the power supply device; and
   a price notification unit that notifies the vehicle of the set power price.
(2) The server according to above (1), wherein
   the power supply reservation includes information on a scheduled time for power supply, and
   the price setting unit sets the power price in the power supply by each of the power supply devices for each time zone.
(3) The server according to above (1) or (2), wherein the price setting unit sets the power price according to a power supply capability of the power supply device in addition to the scheduled supply power amount.
(4) The server according to above (1) or (2), wherein
   the plurality of power supply devices are connected to one power supply source, and
   the price setting unit sets the power price in a such a way that the same power price is applied to the plurality of power supply devices connected to the one power supply source.
(5) The server according to any one of above (1) to (4), wherein when the price notification unit receives an inquiry about the power price from the vehicle, the price notification unit transmits the power price to the vehicle.
(6) The server according to any one of above (1) to (4), wherein the price notification unit notifies the vehicle of a current power price at predetermined time intervals.
(7) The server according to any one of above (1) to (4), wherein the price notification unit notifies the vehicle of a current power price when the set power price changes by a predetermined value or more in at least a part of the power supply devices.
(8) The server according to above (7), wherein the price notification unit does not notify the vehicle of the current power price while the set power price changes by only less than the predetermined value in at least a part of the power supply devices.
(9) The server according to any one of above (1) to (8), wherein the power supply parameter that changes in relation to the scheduled supply power amount is a number of power supply reservations in each of the power supply devices.
(10) The server according to any one of above (1) to (9), wherein the power supply parameter that changes in relation to the scheduled supply power amount is a scheduled supply power amount calculated by the number of power supply reservations in each of the power supply devices and a required supply power amount in each power supply reservation.
(11) The server according to any one of above (1) to (10), wherein the price setting unit sets the power price in such a way that the larger the scheduled supply power amount indicated by the power supply parameter in each of the power supply devices, the higher the power price in the power supply device.
(12) The server according to any one of above (1) to (11), further comprising a cancellation cost notification unit that notifies, when receiving the power supply reservation from the vehicle and then receiving a request for cancellation of the power supply reservation from the vehicle, the vehicle of a cost associated with the cancellation.
(13) A power supply system comprising:
   the server according to any one of above (1) to (12); and
   a vehicle communicating with the server,
   wherein the vehicle includes:
      a route search unit that searches for a travel route to a destination,
      a power price acquisition unit that acquires a power price in the power supply device in the travel route searched by the route search unit based on the power price transmitted from the server, and
      a presentation unit that presents information on the power price in the power supply device in the searched travel route to a user of the vehicle.
(14) The power supply system according to above (13), further comprising a reservation transmission unit that transmits, to the server, a power supply reservation to the power supply device for which power supply is approved, when power supply in the power supply device is approved by the user as a result of presenting the information on the power price in the power supply device to the user of the vehicle.
(15) The power supply system according to above (13) or (14), further comprising a cancellation transmission unit that, when the power supply device that has already transmitted a power supply reservation is no longer included in the changed travel route as a result of the user changing the travel route, transmits, to the server, a request for cancellation of the power supply reservation to the power supply device that is no longer included in the travel route.
(16) A power price setting method performed in a server connected to a plurality of power supply devices supplying a power to a vehicle and a plurality of the vehicles, the power price setting method comprising:
   calculating a value of a power supply parameter that changes in relation to a scheduled supply power amount in each of the power supply devices based on a power supply reservation from each of the vehicles to each of the power supply devices;
   setting a power price in power supply by the power supply device based on the value of the power supply parameter in each of the power supply devices; and
   notifying the vehicle of the set power price.

### Brief Description of Drawings

Fig. 1 is a diagram schematically illustrating a configuration of a wireless power supply system according to a first embodiment.
Fig. 2 is a diagram schematically illustrating a hardware configuration of a server.
Fig. 3 is a diagram schematically illustrating a configuration of a ground power supply device and a vehicle in the wireless power supply system.
Fig. 4 is a schematic configuration diagram of a controller of the ground power supply device and a device connected to the controller.
Fig. 5 is a schematic configuration diagram of an ECU of the vehicle and a device connected to the ECU.
Fig. 6 is a functional block diagram of a processor of the server.
Fig. 7 is a functional block diagram of a processor of the vehicle.
Fig. 8 is an operation sequence diagram illustrating a flow of operations in the server, the ground power supply device, and the vehicle.
Fig. 9 is an operation sequence diagram similar to Fig. 8, illustrating the flow of operations in the server, the ground power supply device, and the vehicle when the travel route is changed.
Fig. 10 is a flowchart illustrating a flow of a setting process of setting a power price in a specific time zone.
Fig. 11 is an operation sequence diagram similar to Fig. 8, illustrating the flow of operations in the server, the ground power supply device, and the vehicle.

### Description of Embodiments

Hereinafter, embodiments will be described in detail with reference to the drawings. In the following description, similar components are denoted by the same reference numerals.

### First Embodiment

### <Overall configuration of wireless power supply system>

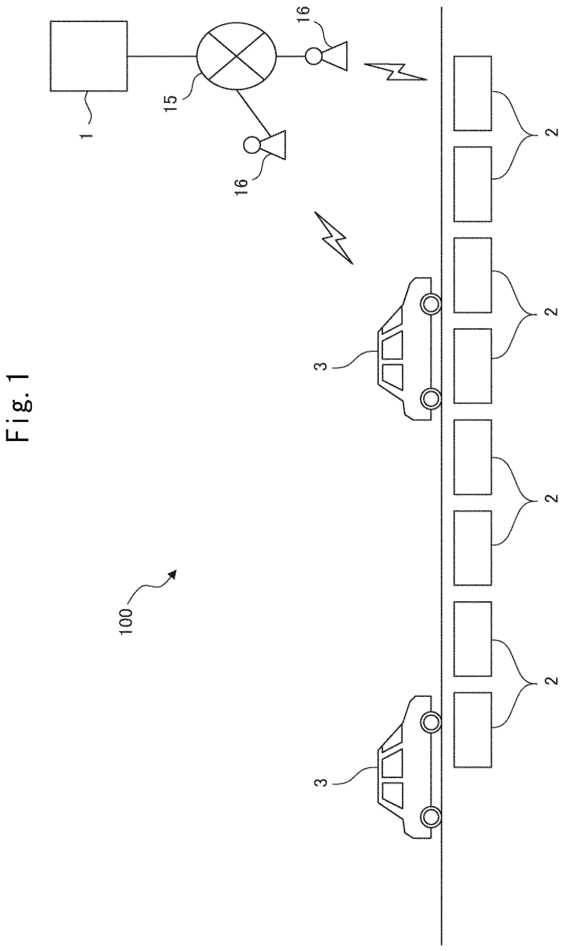

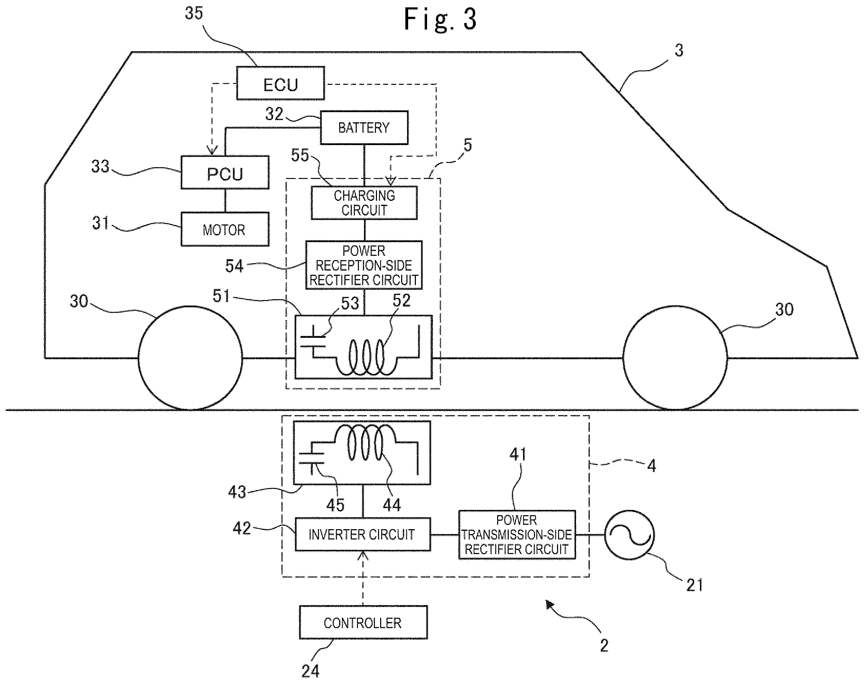

Fig. 1 is a diagram schematically illustrating a configuration of a wireless power supply system 100 according to a first embodiment. The wireless power supply system 100 includes a server 1, a plurality of ground power supply devices 2, and a plurality of vehicles 3, and performs wireless power transmission from the ground power supply device 2 to the vehicle 3 by magnetic field resonance coupling (magnetic field resonance). In particular, in the present embodiment, in the wireless power supply system 100, when the vehicle 3 is traveling, wireless power transmission is performed from the ground power supply device 2 to the vehicle 3. Therefore, the ground power supply device 2 transmits a power to the vehicle 3 in a wireless contact manner when the vehicle 3 is traveling, and the vehicle 3 receives the power from the ground power supply device 2 in a wireless contact manner when the vehicle 3 is traveling. The ground power supply device 2 includes a power transmission device 4 configured to transmit the power to the vehicle 3 in a wireless manner, and the vehicle 3 includes a power reception device 5 configured to receive the power from the power transmission device 4 in a wireless manner (see Fig. 3). As illustrated in Fig. 1, the ground power supply devices 2 are arranged side by side in a traveling direction of the vehicle 3, and the power transmission device 4 of each of the ground power supply devices 2 is embedded in a road (underground) on which the vehicle 3 travels, for example, at the center of a lane on which the vehicle 3 travels.

The term "traveling" means a state where the vehicle 3 is located on the road for traveling. Therefore, the term "traveling" includes not only a state where the vehicle 3 is actually running at any speed greater than zero, but also a state where the vehicle 3 is stopped on the road, for example, by waiting for a traffic light. The wireless power supply system 100 may be configured to perform wireless power transmission from the ground power supply device 2 to the vehicle 3 when the vehicle 3 is stopped at a parking space or the like.

### <Configuration of server>

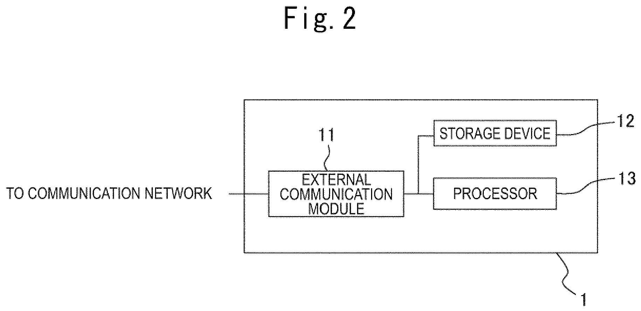

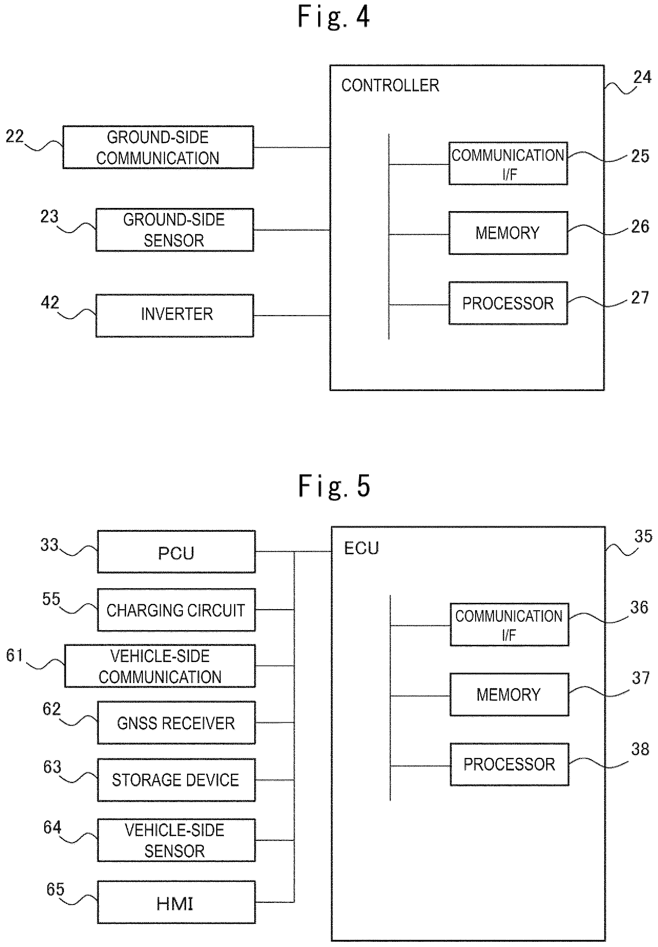

A configuration of the server 1 will be described with reference to Figs. 1 and 2. The server 1 is configured to be able to communicate with a ground-side communication device 22 (Fig. 4) of the ground power supply device 2 and a vehicle-side communication device 61 (Fig. 5) of the vehicle 3. Specifically, the server 1 is connected to a plurality of wireless base stations 16 via a communication network 15 including an optical communication line or the like. The vehicle-side communication device 61 and the ground-side communication device 22 communicate with the wireless base station 16 using wide-area wireless communication. Therefore, the vehicle-side communication device 61 of the vehicle 3 and the ground-side communication device 22 of the ground power supply device 2 communicate with the server 1 using the wide-area wireless communication. As the wide-area wireless communication, various types of wireless communication having a long communication distance can be used, and for example, communication conforming to an arbitrary communication standard such as 3GPP (registered trademark), 4G formulated by IEEE, LTE, 5G, and WiMAX is used. The ground-side communication device 22 may be connected to the communication network 15 in a wired manner. Therefore, the ground-side communication device 22 may be connected to the server 1 not in a wireless manner but in a wired manner.

Fig. 2 is a diagram schematically illustrating a hardware configuration of the server 1. As illustrated in Fig. 2, the server 1 includes an external communication module 11, a storage device 12, and a processor 13. In addition, the server 1 may include an input device such as a keyboard and a mouse, and an output device such as a display.

The external communication module 11 communicates with a device (the ground power supply device 2, the vehicle 3, etc.) outside the server 1. The external communication module 11 includes an interface circuit for connecting the server 1 to a communication network 15. The external communication module 11 is configured to be able to communicate with each of the plurality of vehicles 3 and the plurality of ground power supply devices 2 via the communication network 15 and the wireless base station 16.

The storage device 12 includes a volatile semiconductor memory (for example, RAM), a nonvolatile semiconductor memory (for example, ROM), a hard disk drive (HDD), a solid state drive (SSD), or an optical recording medium. The storage device 12 stores a computer program for executing various processes by the processor 13 and various data used when various processes are executed by the processor 13. In the present embodiment, the storage device 12 stores map information. The map information includes information such as the installation position information of the ground power supply device 2 and power supply capability information in addition to information on the road. In addition, in the present embodiment, the storage device 12 stores a power price in the ground power supply device 2.

The processor 13 includes one or a plurality of CPUs and a peripheral circuit thereof. The processor 13 may further include a GPU or an operation circuit such as a logic operating unit or an arithmetic logic unit. The processor 13 executes various arithmetic processes based on a computer program stored in the storage device 12 of the server 1. Specific arithmetic processing performed by the processor 13 will be described later.

### <Configuration of ground power supply device>

Next, a configuration of the ground power supply device 2 will be described with reference to Figs. 3 and 4. Fig. 3 is a diagram schematically illustrating a configuration of the ground power supply device 2 and the vehicle 3 in the wireless power supply system 100. Fig. 4 is a schematic configuration diagram of a controller 24 of the ground power supply device 2 and a device connected to the controller 24. As illustrated in Figs. 3 and 4, the ground power supply device 2 is connected to a power supply (power supply source) 21, and includes the ground-side communication device 22, a ground-side sensor 23, and the controller 24 in addition to the power transmission device 4. The power supply 21, the ground-side communication device 22, and the controller 24 may be embedded in the road, or may be arranged in a place (including the ground) different from the inside of the road.

The power supply 21 supplies power to the power transmission device 4. The power supply 21 is, for example, a commercial AC power supply that supplies single-layer AC power. The power supply 21 may be another AC power supply that supplies three-phase AC power, or may be a DC power supply such as a fuel cell. In the present embodiment, the plurality of ground power supply devices 2 are connected to one power supply 21.

The power transmission device 4 transmits the power supplied from the power supply 21 to the vehicle 3. The power transmission device 4 includes a power reception-side rectifier circuit 41, an inverter circuit 42, and a power transmission-side resonance circuit 43. In the power transmission device 4, the AC power supplied from the power supply 21 is rectified in the power reception-side rectifier circuit 41 and converted into a DC current, this DC current is converted into a high-frequency AC power in the inverter circuit 42, and this high-frequency AC power is supplied to the power transmission-side resonance circuit 43. When the power supply 21 is the DC power supply, the power reception-side rectifier circuit 41 may be omitted.

The power transmission-side resonance circuit 43 includes a resonator including a power transmission-side coil 44 and a power transmission-side capacitor 45. Various parameters (the outer diameter and inner diameter of the power transmission-side coil 44, the number of turns of the power transmission-side coil 44, electrostatic capacitance of the power transmission-side capacitor 45, and the like) of the power transmission-side coil 44 and the power transmission-side capacitor 45 are determined such that a resonance frequency of the power transmission-side resonance circuit 43 becomes a predetermined set value. The predetermined set value is, for example, from 10 kHz to 100 GHz, and is preferably 85 kHz defined by the SAE TIR J2954 standard as a frequency band for wireless power transmission. When the high-frequency AC power supplied from the inverter circuit 42 is applied to the power transmission-side resonance circuit 43, the power transmission-side resonance circuit 43 generates an alternating magnetic field for power transmission.

The ground-side communication device 22 communicates with the wireless base station 16 by wide-area wireless communication, and thus communicates with the server 1 via the communication network 15. Alternatively, the ground-side communication device 22 is connected to the communication network 15 in a wired manner and communicates with the server 1. In addition, the ground-side communication device 22 communicates with the vehicle-side communication device 61 of the vehicle 3 by narrow-area wireless communication. The narrow-area wireless communication is communication having a shorter communication distance than wide-area wireless communication, and specifically is, for example, communication having a communication distance of less than 10 meters. As the narrow-area wireless communication, various types of short-range wireless communication having a short communication distance can be used, and for example, communication conforming to an arbitrary communication standard (for example, Wi-Fi (registered trademark), Bluetooth (registered trademark) and ZigBee (registered trademark)) formulated by IEEE, ISO, IEC, or the like is used. As a technology for performing narrow-area wireless communication, for example, RFID (Radio Frequency Identification), DSRC (Dedicated Short Range Communication), and the like are used. Furthermore, the ground-side communication device 22 is connected to the controller 24 via a signal line.

The ground-side sensor 23 detects a state of the ground power supply device 2. In the present embodiment, the ground-side sensor 23 includes, for example, a current sensor that detects a current flowing through various devices of the power transmission device 4 and a voltage sensor that detects a voltage applied to various devices of the power transmission device 4. The output of the ground-side sensor 23 is input to the controller 24.

The controller 24 is, for example, a general-purpose computer, and performs various controls of the ground power supply device 2. For example, the controller 24 is electrically connected to the inverter circuit 42 of the power transmission device 4, and controls the inverter circuit 42 to control power transmission by the power transmission device 4. In addition, the controller 24 controls the ground-side communication device 22.

The controller 24 includes a communication interface 25, a memory 26, and a processor 27. The communication interface 25, the memory 26, and the processor 27 are connected to each other via a signal line.

The communication interface 25 includes an interface circuit for connecting the controller 24 to various devices (for example, the ground-side communication device 22, the ground-side sensor 23, the inverter circuit 42, and the like) constituting the ground power supply device 2. The controller 24 communicates with other devices via the communication interface 25.

The memory 26 includes, for example, a volatile semiconductor memory (for example, RAM), a nonvolatile semiconductor memory (for example, ROM), and the like. The memory 26 stores a computer program for executing various processes in the processor 27, various data used when various processes are executed by the processor 27, and the like. In particular, the memory 26 stores, as such data, reservation information including identification information and the like of the vehicle 3 to which the power is scheduled to be supplied by the ground power supply device 2 including the memory 26.

The processor 27 includes one or a plurality of CPUs (Central Processing Units) and a peripheral circuit thereof. The processor 27 may further include an operation circuit such as a logic operating unit or an arithmetic logic unit. The processor 27 executes various processes based on the computer program stored in the memory 26. Specific arithmetic processing performed by the processor 27 will be described later.

### <Configuration of vehicle>

Next, a configuration of the vehicle 3 will be described with reference to Figs. 3 and 5. Fig. 5 is a schematic configuration diagram of an ECU 35 of the vehicle 3 and a device connected to the ECU 35. As illustrated in Fig. 3, the vehicle 3 includes a motor 31, a battery 32, and a power control unit (PCU) 33 in addition to the power reception device 5. In addition, as illustrated in Fig. 5, the vehicle 3 further includes the vehicle-side communication device 61, a GNSS receiver 62, a storage device 63, a plurality of vehicle-side sensors 64, a human-machine interface (HMI) 65, and the electronic control unit (ECU) 35. In the present embodiment, the vehicle 3 is an electric vehicle (BEV) in which the motor 31 drives the vehicle 3. However, the vehicle 3 may be a hybrid vehicle (HEV, PHEV) in which an internal combustion engine drives the vehicle 3 in addition to the motor 31.

The motor 31 is, for example, an AC synchronous motor, and functions as an electric motor. The motor 31 is driven using the power stored in the battery 32 as a power source. The output of the motor 31 is transmitted to a wheel 30.

The battery 32 is a rechargeable secondary battery, and includes, for example, a lithium ion battery, a nickel hydrogen battery, and the like. The battery 32 stores the power (for example, driving electric power of the motor 31) necessary for traveling of the vehicle 3. When the power received by the power reception device 5 is supplied from the power transmission device 4, the battery 32 is charged. The battery 32 may also be chargeable by an external power supply other than the ground power supply device 2 via a charging port provided in the vehicle 3.

The PCU 33 is electrically connected to the battery 32 and the motor 31. The PCU 33 includes an inverter, a boost converter, and a DC/DC converter. The inverter converts the DC power supplied from the battery 32 into the AC power, and supplies the AC power to the motor 31. The boost converter boosts the voltage of the battery 32 as necessary when the power stored in the battery 32 is supplied to the motor 31. The DC/DC converter steps down the voltage of the battery 32 when the power stored in the battery 32 is supplied to an electronic device such as a headlight.

The power reception device 5 receives the power from the power transmission device 4 and supplies the received power to the battery 32. As illustrated in Fig. 3, the power reception device 5 includes a power reception-side resonance circuit 51, a power reception-side rectifier circuit 54, and a charging circuit 55.

The power reception-side resonance circuit 51 is disposed at a bottom of the vehicle 3 so that a distance from the road surface decreases. The power reception-side resonance circuit 51 includes a resonator including a power reception-side coil 52 and a power reception-side capacitor 53. Various parameters (the outer diameter and inner diameter of the power reception-side coil 52, the number of turns of the power reception-side coil 52, the electrostatic capacitance of the power reception-side capacitor 53, and the like) of the power reception-side coil 52 and the power reception-side capacitor 53 are determined such that the resonance frequency of the power reception-side resonance circuit 51 substantially matches the resonance frequency of the power transmission-side resonance circuit 43.

As illustrated in Fig. 3, when the alternating magnetic field is generated by the power transmission-side resonance circuit 43 while the power reception-side resonance circuit 51 faces the power transmission-side resonance circuit 43, vibration of the alternating magnetic field is transmitted to the power reception-side resonance circuit 51 that resonates at the same resonance frequency as that of the power transmission-side resonance circuit 43. As a result, an induced current flows in the power reception-side resonance circuit 51 by electromagnetic induction, and an induced electromotive force is generated in the power reception-side resonance circuit 51 by the induced current. That is, the power transmission-side resonance circuit 43 transmits the power to the power reception-side resonance circuit 51, and the power reception-side resonance circuit 51 receives the power from the power transmission-side resonance circuit 43.

The power reception-side rectifier circuit 54 is electrically connected to the power reception-side resonance circuit 51 and the charging circuit 55. The power reception-side rectifier circuit 54 rectifies the AC power supplied from the power reception-side resonance circuit 51 to convert the AC power into the DC power, and supplies the DC power to the charging circuit 55.

The charging circuit 55 is electrically connected to the power reception-side rectifier circuit 54 and the battery 32. The charging circuit 55 converts the DC power supplied from the power reception-side rectifier circuit 54 into a voltage level of the battery 32, and supplies the DC power to the battery 32. When the power transmitted from the power transmission device 4 is supplied to the battery 32 by the power reception device 5, the battery 32 is charged.

The vehicle-side communication device 61 communicates with the wireless base station 16 by wide-area wireless communication, and thus communicates with the server 1 via the communication network 15. In addition, the vehicle-side communication device 61 communicates with the ground-side communication device 22 of the ground power supply device 2 by narrow-area wireless communication. The vehicle-side communication device 61 is connected to the ECU 35 via an in-vehicle network.

The GNSS receiver 62 detects a self-position of the vehicle 3 (for example, the latitude and longitude of the vehicle 3) based on positioning information obtained from a plurality of (for example, three or more) positioning satellites. The output of the GNSS receiver 62, that is, the self-position of the vehicle 3 detected by the GNSS receiver 62 is transmitted to the ECU 35 via the in-vehicle network. As the GNSS receiver 62, for example, a GPS receiver is used.

The storage device 63 stores data. The storage device 63 includes, for example, a hard disk drive (HDD), a solid state drive (SSD), or an optical recording medium. In the present embodiment, the storage device 63 stores map information. The map information includes information such as the installation position information of the power transmission-side coil 44 of the ground power supply device 2 and the identification information thereof in addition to information on the road. The ECU 35 acquires the map information from the storage device 63.

The vehicle-side sensor 64 detects a state of the vehicle 3 and a state around the vehicle 3. In the present embodiment, the vehicle-side sensor 64 includes, as a sensor that detects the state of the vehicle 3, for example, a current sensor that detects a current flowing through various devices of the power reception device 5. When the vehicle 3 is an autonomous driving vehicle, the vehicle-side sensor 64 includes a camera that captures an image of the periphery of the vehicle 3 and a distance measuring sensor (LiDAR, millimeter wave radar, etc.) that detects a distance to an object around the vehicle 3 as sensors that detect a state around the vehicle 3. The output of the vehicle-side sensor 64 is input to the ECU 35 via the in-vehicle network.

An HMI 65 notifies the user of the vehicle 3 of information for notification received from the ECU 35 via the in-vehicle network. Therefore, the HMI 65 functions as a notification device that notifies the user of information. Specifically, the HMI 65 includes, for example, a display device such as a liquid crystal display and a speaker. The HMI 65 receives an input from an occupant and transmits the received input to the ECU 35 via the in-vehicle network. Therefore, the HMI 65 functions as an input device that receives an input from the user. Specifically, the HMI 65 includes a touch panel, a switch, a button, and a remote controller. The HMI 65 is provided, for example, on an instrument panel.

The ECU 35 performs various controls of the vehicle 3. For example, the ECU 35 is electrically connected to the charging circuit 55 of the power reception device 5, and controls the charging circuit 55 to control charging of the battery 32 by the power transmitted from the power transmission device 4. Furthermore, the ECU 35 is electrically connected to the PCU 33, and controls the PCU 33 to control exchange of the power between the battery 32 and the motor 31. Furthermore, the ECU 35 controls devices connected via the in-vehicle network, for example, the vehicle-side communication device 61, the storage device 63, and the HMI 65.

The ECU 35 is connected to the PCU 33, the charging circuit 55, the vehicle-side communication device 61, the GNSS receiver 62, the storage device 63, the vehicle-side sensor 64, and the HMI 65 via the in-vehicle network conforming to a standard such as CAN (Controller Area Network). The ECU 35 includes a communication interface 36, a memory 73, and a processor 38. The communication interface 36, the memory 73, and the processor 38 are connected to each other via a signal line.

The communication interface 36 includes an interface circuit for connecting the ECU 35 to the in-vehicle network. The ECU 35 communicates with other devices via the communication interface 36.

The memory 73 includes, for example, a volatile semiconductor memory (for example, RAM) and a nonvolatile semiconductor memory (for example, ROM). The memory 73 stores a computer program for executing various processes in the processor 38, various data used when various processes are executed by the processor 38, and the like.

The processor 38 includes one or a plurality of CPUs (Central Processing Units) and a peripheral circuit thereof. The processor 38 may further include an operation circuit such as a logic operating unit or an arithmetic logic unit. The processor 38 executes various processes based on the computer program stored in the memory 73. Specific arithmetic processing performed by the processor 38 will be described later.

### <Flow of power supply>

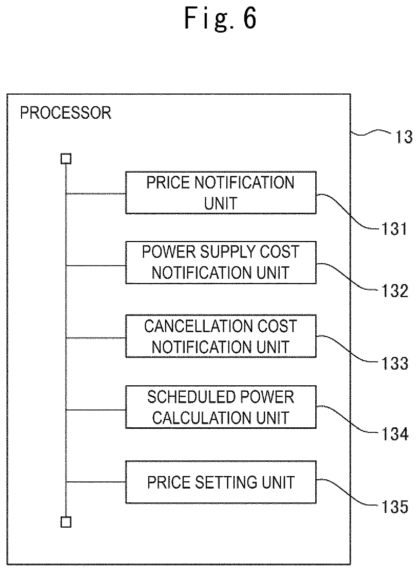

Next, a flow of operations in the server 1, the ground power supply device 2, and the vehicle 3 when power supply from the ground power supply device 2 to the vehicle 3 is performed will be described with reference to Figs. 6 to 8.

In the present embodiment, a travel route to a destination is searched for in the vehicle 3, and an inquiry about a power price (in the present embodiment, the price per unit power amount) in each of the ground power supply devices 2 in the searched travel route is made from the vehicle 3 to the server 1. Upon receiving the inquiry about the power price, the server 1 transmits the power price in the target ground power supply device 2 to the vehicle 3. Upon receiving the power price, the vehicle 3 presents the travel route and information on the power price in the ground power supply device 2 in each travel route to the user.

As a result of such presentation, when the user approves power supply in the ground power supply device 2, the vehicle 3 transmits a power supply reservation in the ground power supply device 2 to the server 1. When the server 1 receives the power supply reservation, the server 1 transmits the reservation information to the target ground power supply device 2. When the vehicle 3 travels on the target ground power supply device 2 in such a state, the power is supplied from the ground power supply device 2 to the vehicle 3 during the travel.

Fig. 6 is a functional block diagram of the processor 13 of the server 1. As illustrated in Fig. 6, the processor 13 of the server 1 includes a price notification unit 131 that notifies the vehicle 3 of a set power price, a power supply cost notification unit 132 that notifies the vehicle 3 of a power supply cost when the power is supplied to the vehicle 3, and a cancellation cost notification unit 133 that notifies, when cancellation of the power supply reservation is received from the vehicle 3 after the power supply reservation is received from the vehicle 3, the vehicle 3 of a cost involved in the cancellation. These units included in the processor 13 of the server 1 are, for example, functional modules implemented by a computer program operating on the processor 13. Alternatively, each of these units included in the processor 13 of the server 1 may be a dedicated arithmetic circuit provided in the processor 13. Details of these units will be described later.

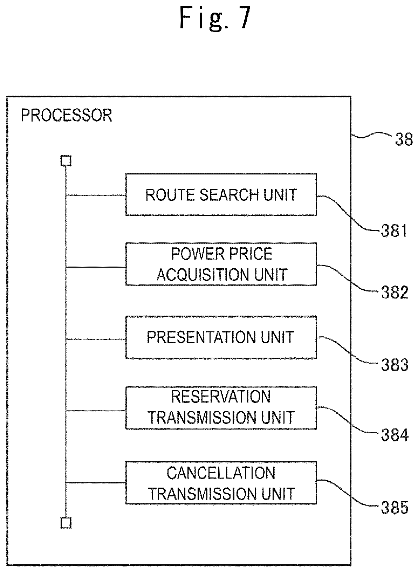

Fig. 7 is a functional block diagram of the processor 38 of the vehicle 3. As illustrated in Fig. 7, the processor 38 of the vehicle 3 includes a route search unit 381 that searches for a travel route of the vehicle 3 to a destination, a power price acquisition unit 382 that acquires the power price in the ground power supply device 2 in the travel route searched by the route search unit 381 based on the power price transmitted from the server 1, and a presentation unit 383 that presents the power price in the ground power supply device 2 in the searched travel route to the user of the vehicle 3.

In addition, the processor 38 of the vehicle 3 includes: a reservation transmission unit 384 that transmits, to the server 1, a power supply reservation to the ground power supply device 2 for which the power supply is approved when the power supply in the ground power supply device 2 is approved by the user as a result of presenting the power price in the ground power supply device 2 to the user; and a cancellation transmission unit 385 that transmits, to the server 1, a request for cancellation of the power supply reservation to the ground power supply device 2 that is no longer included in the travel route when the user changes the travel route, so that the ground power supply device 2 for which the power supply reservation has already been transmitted is no longer included in the changed travel route.

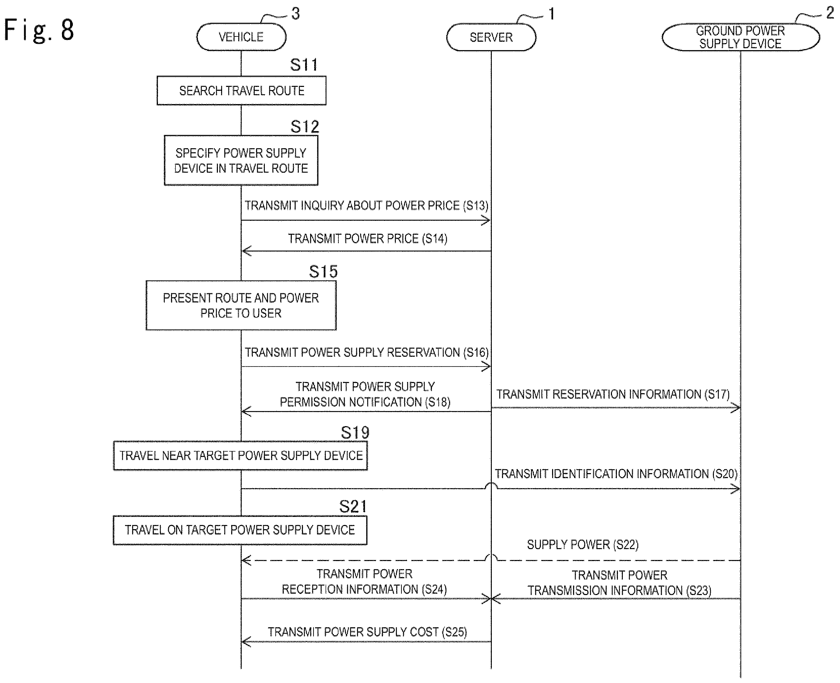

Next, a flow of operations in the server 1, the ground power supply device 2, and the vehicle 3 when power supply from the ground power supply device 2 to the vehicle 3 is performed will be described in detail with reference to Fig. 8. Fig. 8 is an operation sequence diagram illustrating the flow of operations in the server 1, the ground power supply device 2, and the vehicle 3.

As illustrated in Fig. 8, when a destination is input by the user via the HMI 65, the route search unit 381 of the processor 38 of the vehicle 3 searches for a travel route of the vehicle 3 to the destination (step S11). The route search unit 381 searches for a travel route of the vehicle 3 from the self-position of the vehicle 3 to the destination based on the self-position of the vehicle 3 detected by the GNSS receiver 62 and the destination input by the user via the HMI 65. The route search unit 381 searches for the travel route by, for example, a method similar to that of a known navigation device. In the present embodiment, the travel route searched by the route search unit 381 includes a scheduled time for the vehicle 3 to pass through each place in addition to the travel route of the vehicle 3. The route search unit 381 may search for a plurality of travel routes from the self-position of the vehicle 3 to the destination. The travel route searched by the route search unit 381 is stored in the memory 37.

Next, the power price acquisition unit 382 of the processor 38 of the vehicle 3 specifies the ground power supply device 2 (particularly, the position of the power transmission-side coil 44) located in the travel route searched by the route search unit 381 (step S12). As described above, the map information stored in the storage device 63 includes the installation position information of each of the ground power supply devices 2 and its identification information. Therefore, the power price acquisition unit 382 specifies the identification information of the ground power supply device 2 located in the travel route based on the map information stored in the storage device 63 and the travel route searched by the route search unit 381. In addition, the power price acquisition unit 382 may specify a scheduled time at which the vehicle 3 arrives at each of the specified ground power supply devices 2. The scheduled time at which the vehicle arrives at each of the ground power supply devices 2 is specified based on the travel route including the scheduled time at which the vehicle passes through each place and the installation position of each of the ground power supply devices 2. The ground power supply device 2 located in the travel route may be specified in the processor 13 of the server 1. In this case, information on the searched travel route is transmitted from the vehicle 3 to the ground power supply device 2.

When the ground power supply device 2 located in the travel route is specified, the power price acquisition unit 382 transmits a signal, including the inquiry about the power price in the specified ground power supply device 2, to the server 1 (step S13). The inquiry signal includes the identification information of the ground power supply device 2 to be inquired about the power price. In addition, in the present embodiment, the inquiry signal may include a scheduled time of passing through each of the ground power supply devices 2.

When the server 1 receives the inquiry signal of the power price, the price notification unit 131 of the server 1 transmits, to the vehicle 3, a signal including the power price of the ground power supply device 2 to be inquired (step S14). In the present embodiment, as will be described later, the power price in each of the ground power supply devices 2 is set so as to change according to a demand for power in the ground power supply device 2. Therefore, the price notification unit 131 transmits a signal including the current power price in each of the ground power supply devices 2 to the vehicle 3. In the present embodiment, the power price of each of the ground power supply devices 2 is set to change for each time zone (for example, every 30 minutes, every hour, or the like) in which power supply is scheduled to be performed. Therefore, in the present embodiment, the price notification unit 131 transmits, to the vehicle 3, a signal including the power price in a time zone including a scheduled vehicle passage time of the ground power supply device 2 to be inquired. In any case, in the present embodiment, when the inquiry about the power price is received from the vehicle 3, the price notification unit 131 transmits information including the power price to the vehicle 3. In particular, the power price in each of the ground power supply devices 2 in each time zone is stored in the storage device 12 of the server 1, and the price notification unit 131 refers to the power price stored in the storage device 12.

When the vehicle 3 receives the signal including the power price, that is, when the power price acquisition unit 382 acquires the power price in each of the ground power supply devices 2 located in the travel route based on the signal including the power price transmitted from the server 1, the presentation unit 383 of the processor 38 of the vehicle 3 presents the travel route searched by the route search unit 381 and the power price in the ground power supply device 2 in the travel route to the user of the vehicle 3 (step S15). In the present embodiment, the presentation unit 383 presents the power price in each of the ground power supply devices 2 in the travel route. Therefore, when there are the plurality of ground power supply devices 2 in the travel route, the presentation unit 383 presents the power price in each of the plurality of ground power supply devices 2. Specifically, the presentation unit 383 transmits a display signal to the HMI 65 so that the display of the HMI 65 displays the travel route and the power price in each of the ground power supply devices 2.

The presentation unit 383 may present a total power cost at the time of traveling on the travel route based on the power price in each of the ground power supply devices 2 and a predicted supply power amount (for example, a constant value) in each of the ground power supply devices 2. Therefore, it can be said that the presentation unit 383 presents the user of the vehicle 3 with the information on the power price in the ground power supply device 2 in the travel route.

As a result of the presentation unit 383 presenting the information on the power price in each of the ground power supply devices 2 to the user, when the user approves power supply in each of the ground power supply devices 2, the reservation transmission unit 384 of the processor 38 of the vehicle 3 transmits a signal including the power supply reservation to the ground power supply device 2 for which power supply has been approved to the server 1 (step S16). The user approves the power supply in each of the ground power supply devices 2 by the HMI 65. For example, the user presses an approval button displayed next to the power price in each of the ground power supply devices 2 displayed on the display, whereby the power supply is approved. The power supply reservation transmitted from the reservation transmission unit 384 includes identification information of the ground power supply device 2 for which power supply is approved, the power price for which power supply is approved for each of the ground power supply devices 2, and identification information of the vehicle 3 including the reservation transmission unit 384. In the present embodiment, the power supply reservation includes information such as a time (specific time or time zone) when the vehicle 3 is scheduled to be supplied with the power from each of the ground power supply devices 2. In addition, the power supply reservation may include a required supply power amount to each of the ground power supply devices 2. The required supply power amount is set based on, for example, a power receiving capability of the power reception device 5, and the required supply power is set larger as the power receiving capability is higher.

When the server 1 receives the signal including the power supply reservation, the processor 13 of the server 1 transmits the reservation information to the ground power supply device 2 corresponding to the identification information included in the power supply reservation (step S17). The reservation information includes the identification information of the vehicle 3 for which the power supply reservation is made, the time when the vehicle 3 is scheduled to be supplied with the power from the ground power supply device 2, and the like. The processor 27 of the ground power supply device 2 stores the identification information of the vehicle 3 included in the received reservation information and information such as a scheduled power supply time in the memory 26. In addition, the processor 13 of the server 1 transmits a notification of permitting power supply to the vehicle 3 unless there is information indicating that the power cannot be supplied from the ground power supply device 2, such as occurrence of an abnormality in the ground power supply device 2 as a power supply reservation target (step S18).

When the vehicle 3 having received the power supply permission notification has traveled near the target ground power supply device 2, the vehicle 3 transmits the identification information of the vehicle 3 to the ground power supply device 2 (step S20). The identification information is transmitted from the vehicle 3 to the ground power supply device 2 by narrow-area wireless communication. Therefore, the ground power supply device 2 receives the identification information of the vehicle 3 by narrow-area wireless communication, thereby recognizing that the vehicle 3 is approaching the ground power supply device 2. In addition, upon receiving the identification information of the vehicle 3, the processor 27 of the ground power supply device 2 collates the received identification information with the identification information included in the reservation information stored in the memory 26. Then, when the received identification information matches any of the identification information included in the reservation information stored in the memory 26 as a result of the collation, the processor 27 of the ground power supply device 2 supplies the power to the power transmission device 4 so that the power can be supplied to the vehicle 3 when the vehicle 3 travels on the ground power supply device 2.

Thereafter, when the vehicle 3 travels on the ground power supply device 2 in a state where the power is supplied to the power transmission device 4 (step S21), wireless power supply from the ground power supply device 2 to the vehicle 3 is performed (step S22). When the power is supplied, the ground-side sensor 23 of the ground power supply device 2 detects a current and a voltage flowing in the power transmission device 4. In addition, when the power is supplied, the vehicle-side sensor 64 of the vehicle 3 detects a current and a voltage flowing in the power reception device 5.

When the wireless power supply from the ground power supply device 2 to the vehicle 3 is completed, the processor 27 of the ground power supply device 2 calculates a transmission power amount during the power supply based on the current, the voltage, and the like detected by the ground-side sensor 23 during the power supply. In addition, the processor 27 of the ground power supply device 2 transmits information on power transmission including the calculated transmission power amount to the server 1 (step S23). In addition, when the wireless power supply from the ground power supply device 2 to the vehicle 3 is completed, the processor 38 of the vehicle 3 calculates a reception power amount during the power supply based on the current, the voltage, and the like detected by the vehicle-side sensor 64 during the power supply. In addition, the processor 38 of the vehicle 3 transmits information on power reception including the calculated reception power amount to the server 1 (step S24).

Thereafter, the power supply cost notification unit 132 of the processor 13 of the server 1 calculates the power supply cost based on the information on power transmission received from the ground power supply device 2, the information on power reception received from the vehicle 3, and the power price in the ground power supply device 2 transmitted in step S14. Then, the power supply cost notification unit 132 transmits a signal including the calculated power supply cost to the vehicle 3 (step S25).

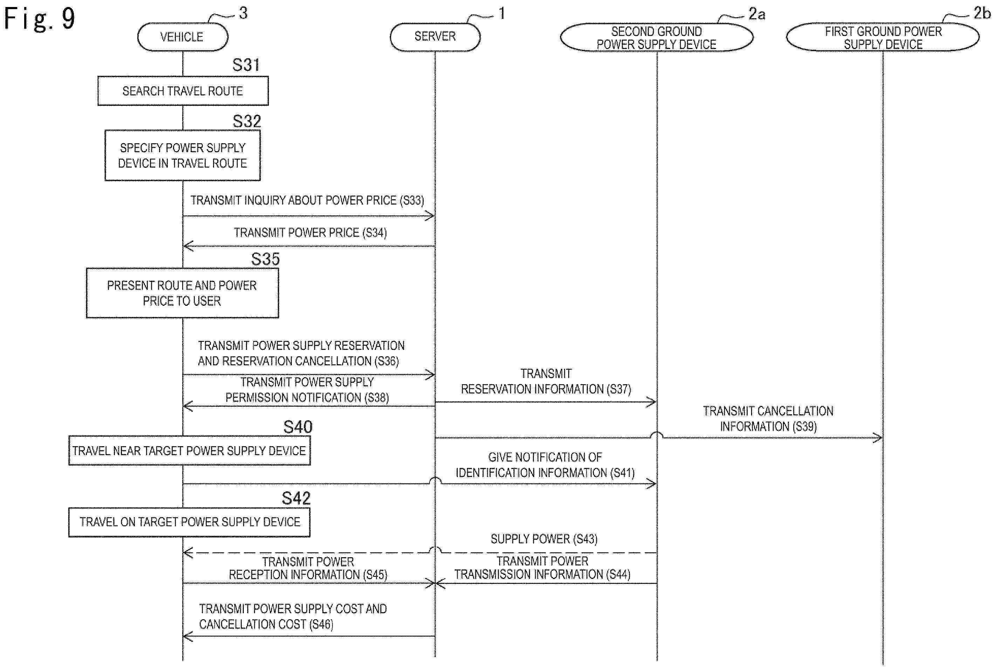

Next, a flow of operations in the server 1, the ground power supply device 2, and the vehicle 3 when the travel route is changed will be described with reference to Fig. 9. Fig. 9 is an operation sequence diagram similar to Fig. 8, illustrating the flow of operations in the server 1, the ground power supply device 2, and the vehicle 3 when the travel route is changed. The example illustrated in Fig. 9 illustrates a case where although the travel route is already set, the travel route is reset by the user changing a destination or the like. In particular, the example illustrated in Fig. 9 illustrates a case where a first ground power supply device 2a is included and the second ground power supply device 2b is not included in the already set travel route, and the first ground power supply device 2a is not included and the first ground power supply device 2a is included in the reset travel route.

As can be seen from Fig. 9, also in the case where the travel route is reset, the server 1, the ground power supply device 2, and the vehicle 3 basically operate in the same manner as in a case where the travel route illustrated in Fig. 8 is set for the first time. Therefore, steps S31 to S38 and S40 to S45 of Fig. 9 are basically similar to steps S11 to S18 and S19 to S24 of Fig. 8, and thus description thereof is omitted.

As illustrated in Fig. 9, even when the travel route is reset, the travel route is searched (step S31), and the searched travel route and the power price in the ground power supply device 2 in the travel route are presented to the user of the vehicle 3 (step S35). Then, when the user approves power supply, the reservation transmission unit 384 of the processor 38 of the vehicle 3 transmits the signal including the power supply reservation to the server 1 (step S36). In addition, the cancellation transmission unit 385 of the processor 38 of the vehicle 3 transmits, to the server 1, a signal including the request for cancellation of the power supply reservation for the first ground power supply device 2a for which, although the power supply reservation has been transmitted in the past, the power supply reservation has become unnecessary due to resetting of the travel route (step S36). That is, as a result of the user changing the travel route, when the ground power supply device 2 that has already transmitted the signal including the power supply reservation is no longer included in the changed travel route, the cancellation transmission unit 385 transmits, to the server 1, the signal including the request for cancellation of the power supply reservation to the ground power supply device 2 that is no longer included in the changed travel route.

When the server 1 receives the signal including the power supply reservation and the signal including the request for cancellation of the power supply reservation, the processor 13 of the server 1 transmits the reservation information to the first ground power supply device 2a corresponding to the identification information included in the power supply reservation (step S37). In addition, the processor 13 of the server 1 transmits cancellation information indicating that the power supply reservation has been canceled to the second ground power supply device 2b to which the reservation information has been transmitted in the past and in which the corresponding identification information has not been included in the current power supply reservation (step S39). The cancellation information includes the identification information of the vehicle 3 for which the power supply reservation has been made, a time when the vehicle 3 is scheduled to supply the power from the ground power supply device 2, and the like. When receiving the cancellation information, the processor 27 of the second ground power supply device 2b deletes the identification information of the vehicle 3 included in the cancellation information from the memory 26.

After power supply, when receiving the information on power transmission from the ground power supply device 2 and receiving the information on power reception from the vehicle 3, the power supply cost notification unit 132 of the server 1 transmits information including the power supply cost to the vehicle 3 (step S46). In addition, the cancellation cost notification unit 133 of the server 1 calculates a cancellation cost associated with the cancellation of the power supply reservation when, after the signal including the power supply reservation is temporarily received from the vehicle 3, a signal including the request for cancellation of the power supply reservation is received from the vehicle 3. Then, the cancellation cost notification unit 133 of the server 1 transmits information including the calculated cancellation cost to the vehicle 3 (step S46). That is, when the cancellation cost notification unit 133 receives the power supply reservation from the vehicle 3 and then receives the request for cancellation of the power supply reservation from the vehicle 3, the cancellation cost notification unit 133 notifies the vehicle 3 of the cost associated with the cancellation of the power supply reservation.

The cost associated with cancellation of the power supply reservation is set to, for example, a predetermined fixed price. Alternatively, the cost associated with cancellation of the power supply reservation may vary according to a remaining time until a scheduled power supply time zone. Specifically, for example, when the remaining time until the scheduled power supply time zone is within 1 hour, the cost associated with cancellation of the power supply reservation may be set to 10% of an average supply power amount at one time of power supply, when the remaining time is within 30 minutes, the cost may be set to 20% of the average supply power amount, and when the remaining time is within 10 minutes, the cost may be set to 30% of the average supply power amount.

According to the present embodiment, when the power is supplied from the ground power supply device 2 to the vehicle 3, the user of the vehicle 3 is notified in advance of the power price in each of the ground power supply devices 2, and the power is supplied only when the user approves the power price. Therefore, the user of the vehicle 3 can supply the power from the ground power supply device 2 to the vehicle 3 only when the power price can be determined to be suitable.

In the present embodiment, when the power supply reservation is temporarily made and then canceled, information including the cancellation cost is transmitted to the vehicle 3, and the user needs to pay the cancellation cost. As a result, the power supply reservation with a certain degree of accuracy is made. In the present embodiment, when the power supply reservation is temporarily made and then canceled, the cancellation cost is charged to the user of the vehicle 3 who has canceled the power supply reservation. However, even in such a case, the cancellation cost may not be charged to the user.

### <Setting of power supply price>

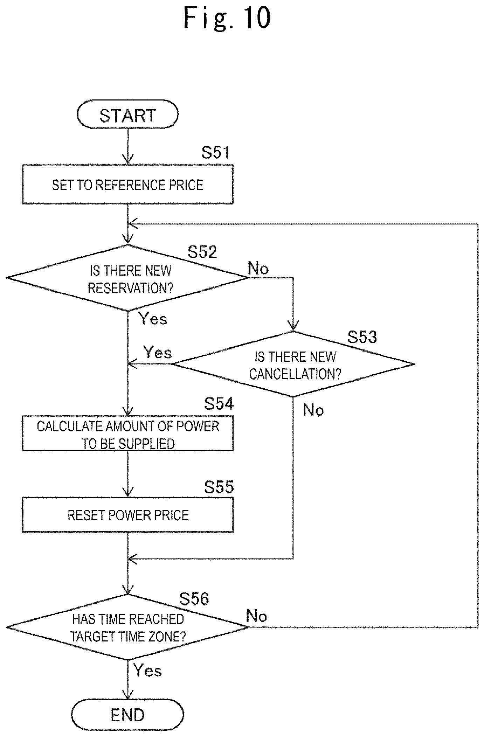

Next, a power supply price setting method in each of the ground power supply devices 2 will be described with reference to Fig. 10.

In the present embodiment, when setting the power price in each of the ground power supply devices 2, the server 1 calculates a value of a scheduled supply power amount in each of the ground power supply devices 2 based on the power supply reservation from each of the vehicles 3 to each of the ground power supply devices 2. Then, the server 1 sets the power price according to the ground power supply device 2 based on the scheduled supply power amount calculated in each of the ground power supply devices 2. The set power price of each of the ground power supply devices 2 is stored in the storage device 12 of the server 1, and the server 1 transmits the stored price information to the vehicle 3 in response to an inquiry from each of the vehicles 3. The power supply price in each of the ground power supply devices 2 is set based on the power supply reservation in the ground power supply device 2.

As illustrated in Fig. 7, in addition to the price notification unit 131, the power supply cost notification unit 132, and the cancellation cost notification unit 133 described above, the processor 13 of the server 1 includes a scheduled power calculation unit 134 that calculates the scheduled supply power amount in each of the ground power supply devices 2 based on the power supply reservation from each of the vehicles 3 to each of the ground power supply devices 2, and a price setting unit 135 that sets the power price in the power supply by the ground power supply device 2 based on the scheduled supply power amount in each of the ground power supply devices 2.

Fig. 10 is a flowchart illustrating a flow of a setting process of setting the power price in a specific time zone. The setting process illustrated in Fig. 10 is performed in the processor 13 of the server 1. The setting process illustrated in Fig. 10 is executed for each time zone of each of the ground power supply devices 2, and is started before an arbitrary time (for example, one day before) in a target time zone.

In the setting process, first, the price setting unit 135 sets the power price in the target time zone to a reference price (step S51). The reference price is a predetermined constant price set in a case where there is almost no power supply reservation from the vehicle 3 in the target time zone. Therefore, the reference price is basically a lowest power price in the target time zone.

Thereafter, the scheduled power calculation unit 134 determines whether a new power supply reservation has been received from any vehicle 3 for the target time zone (step S52). The power supply reservation from the arbitrary vehicle 3 is transmitted from the reservation transmission unit 384 of the vehicle 3 by the operation illustrated in step S16 and the like of Fig. 8. In addition, a reservation power calculation unit 234 determines whether or not a new cancellation request of the power supply reservation already received from the arbitrary vehicle 3 has been received for the target time zone (step S53). The cancellation request of the power supply reservation from the arbitrary vehicle 3 is transmitted from the cancellation transmission unit 385 of the vehicle 3 by the operation illustrated in step S36 of Fig. 9.

When it is determined in step S52 that the new power supply reservation has been received or when it is determined in step S53 that the new cancellation request has been received, the reservation power calculation unit 234 calculates an amount of the power to be supplied from the target ground power supply device 2 for the target time zone (step S54). In the present embodiment, the amount of the power to be supplied is calculated by summing the required supply power amounts from the respective vehicles 3 included in all the power supply reservations in the target time zone. That is, in the present embodiment, the amount of the power to be supplied is calculated based on the number of power supply reservations and the required supply power amount in each power supply reservation in the target time zone in the target ground power supply device 2. Therefore, when it is determined in step S52 that the new power supply reservation has been received, a new amount of the power to be supplied is calculated by adding the required supply power amount, included in the new power supply reservation, to the amount of the power to be supplied until then. On the other hand, when it is determined in step S53 that the new cancellation request has been received, a new amount of the power to be supplied is calculated by subtracting the required supply power amount included in the power supply reservation corresponding to the new cancellation request from the amount of the power to be supplied until then.

When the amount of the power to be supplied in the target ground power supply device 2 is calculated in step S54, the price setting unit 135 resets the power price according to the ground power supply device 2 based on the calculated amount of the power to be supplied (step S56). In particular, the price setting unit 135 sets the power price in the target time zone of the target ground power supply device 2 based on the amount of the power to be supplied in the target time zone of the target ground power supply device 2. Therefore, the price setting unit 135 sets the power price in the power supply by each of the ground power supply devices 2 for each time zone. Specifically, the price setting unit 135 sets the power price such that the larger the scheduled supply power amount in each time zone and each of the ground power supply devices 2, the higher the power price in the time zone and the ground power supply device 2.

In addition, the price setting unit 135 may set the power price according to the power supply capability of each of the ground power supply devices 2. For example, when the amount of power that can be supplied per unit time of the ground power supply device 2 is large (that is, when the power supply capability is high), the price setting unit 135 sets the power price to be low with respect to the amount of the power to be supplied. On the other hand, when the amount of power that can be supplied per unit time of the ground power supply device 2 is small (that is, when the power supply capability is low), the price setting unit 135 sets the power price to be high with respect to the amount of the power to be supplied. As a result, it is possible to prevent many power supply reservations from being made to the ground power supply device 2 having low power supply capability.

The power price calculated by the price setting unit 135 is stored in the storage device 12 of the server 1 for each of the ground power supply devices 2 and for each time zone. Therefore, the power price stored in the storage device 12 of the server 1 varies according to a power demand. The power price stored in the storage device 12 of the server 1 is transmitted to the vehicle 3 based on the inquiry from the vehicle 3 as described above with reference to step S14 of Fig. 8.

On the other hand, in a case where it is determined in step S52 that a new power supply reservation has not been received and it is determined in step S53 that a new cancellation request has not been received, the power to be supplied is not calculated, and the power price is also maintained at the price set in the past without being reset.

When the power price is reset, the processor 13 of the server 1 determines whether or not a current time has reached the target time zone (step S56). In a case where it is determined in step S56 that the current time has not reached the target time zone, steps S52 to S55 are repeated. On the other hand, in a case where it is determined in step S56 that the current time has reached the target time zone, the setting process is terminated.

### <Effects and modified example>

In the present embodiment, a power amount price for power supply by each of the ground power supply devices 2 is set according to a status of power supply reservation of each of the ground power supply devices 2. Therefore, according to the present embodiment, the power price can be set to a price reflecting an actual power demand.

In addition, in the present embodiment, the power price of each of the ground power supply devices is set for each time zone. Since the power demand changes according to the time zone, according to the present embodiment, the power price reflecting the power demand changing according to the time zone can be set. In the present embodiment, the power price of the ground power supply device 2 is set for each time zone; however, the power price may be set based on the number of future power supply reservations regardless of the time zone.

In the above embodiment, the scheduled supply power amount is calculated based on the number of power supply reservations for each ground power supply device and the required supply power amount in each power supply reservation, and the power price is set based on the scheduled supply power amount. However, the scheduled supply power may be calculated by another method such as calculation based on the number of power supply reservations and an average supplied power in one power supply in each of the ground power supply devices 2. The power price may be set based on a value of a parameter different from the scheduled supply power as long as the value is a value of the power supply parameter that changes in relation to the scheduled supply power amount in each ground power supply device. For example, the power price may be set based on the number of power supply reservations (that is, the number of vehicles 3 scheduled to pass through the target ground power supply device 2 in the target time zone) in the target time zone of the target ground power supply device 2.

In the above embodiment, the power price is set for each of the ground power supply devices 2. In particular, in the above embodiment, since the plurality of power transmission-side resonance circuits 43 (that is, the power transmission-side coil 44) are provided in one ground power supply device 2, the same power price is set for all the power transmission-side coils 44 provided in one ground power supply device 2. However, the same power price may be set for the plurality of ground power supply devices 2. In particular, since the plurality of ground power supply devices 2 are connected to one power supply 21, the power price may be set so that the same power price is applied to the plurality of ground power supply devices 2 connected to one power supply 21. As a result, the power price can be set according to the power demand for the power supply 21. Alternatively, a different power price may be set for each of the power transmission-side coils 44 provided in one ground power supply device 2. As a result, the power price can be set according to a fine power demand for each of the power transmission-side coils 44.

### Second Embodiment

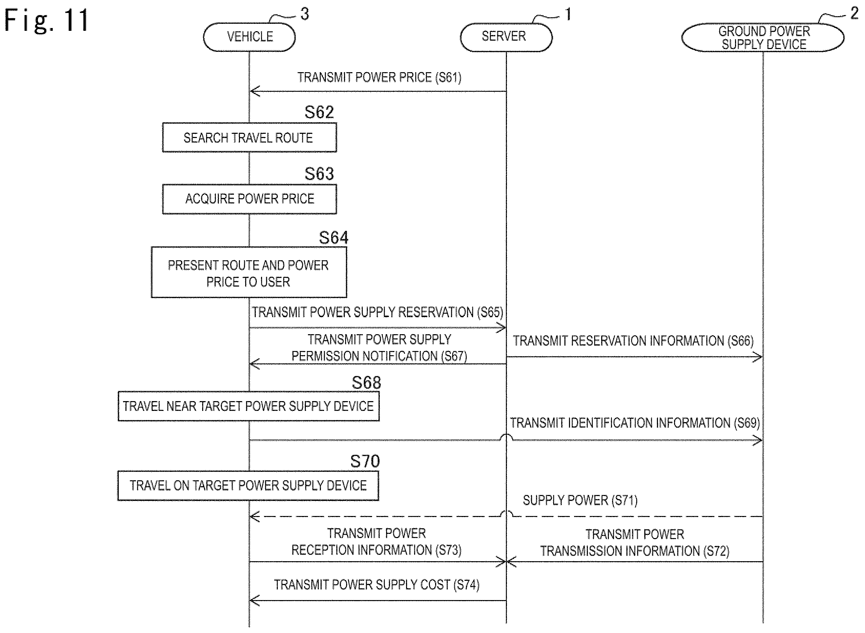

Next, referring to Fig. 11, the configuration and operation of a wireless power supply system 100 according to a second embodiment are similar to the configuration and operation of the wireless power supply system 100 according to the first embodiment. Therefore, hereinafter, portions different from the wireless power supply system 100 according to the first embodiment will be mainly described.

In the first embodiment, when the inquiry about the power price is received from the vehicle 3, the price notification unit 131 of the server 1 transmits information including the power price of the vehicle 3 to the vehicle 3. However, in the present embodiment, the price notification unit 131 simultaneously transmits a current power price to a plurality of the vehicles 3 at predetermined arbitrary constant time intervals.

Fig. 11 is an operation sequence diagram similar to Fig. 8, illustrating the flow of operations in the server 1, the ground power supply device 2, and the vehicle 3. Steps S65 to S74 of Fig. 11 are similar to steps S16 to S25 of Fig. 8, and thus description thereof is omitted.

As illustrated in Fig. 11, the price notification unit 131 of the server 1 transmits the current power price to the vehicle 3 at constant time intervals (step S61). In particular, in the present embodiment, the price notification unit 131 simultaneously transmits the current power prices stored in the storage device 12 to all the vehicles 3 that can communicate with the server 1 at constant time intervals. The vehicle 3 that has received the power price stores the received power price in a storage device 63 or a memory 37 of the vehicle 3.

Thereafter, in accordance with an input of a destination via an HMI 65 by a user, a route search unit 381 searches for a travel route of the vehicle 3 to the destination as in step S11 in Fig. 8 (step S62). When the route search unit 381 searches for the travel route, a power price acquisition unit 382 specifies the ground power supply device 2 located in the travel route searched by the route search unit 381, and acquires the power price (in particular, the power price in the time zone in which the vehicle 3 reaches the ground power supply device 2) in the specified ground power supply device 2 from the storage device 63 or the memory 37 of the vehicle 3 (step S63). Then, a presentation unit 383 of the vehicle 3 presents the travel route searched by the route search unit 381 and the power price in the ground power supply device 2 in the travel route (step S64).

According to the present embodiment, since there is no inquiry about the power price to the server 1, processing load in the server 1 can be reduced.

In the above embodiment, the price notification unit 131 transmits the current power price to the vehicle 3 at constant time intervals. However, in at least some of the ground power supply devices 2, when the power price set by the setting process illustrated in Fig. 10 changes by a predetermined value or more, the price notification unit 131 may transmit the current power price after the change to the vehicle 3, and may not transmit the power price to the vehicle 3 while the power price changes by only less than the predetermined value. As a result, a transmission frequency of the power price of the server 1 can be reduced, and thus a power consumption of the server 1 can be reduced.

Although the preferred embodiments according to the present invention have been described above, the present invention is not limited to these embodiments, and various modifications and changes can be made within the scope of the claims.

## Claims

1. A server communicating with a plurality of power supply devices supplying a power to a vehicle and a plurality of the vehicles, the server comprising:
a scheduled power calculation unit that calculates a value of a power supply parameter that changes in relation to a scheduled supply power amount in each of the power supply devices based on a power supply reservation from each of the vehicles to each of the power supply devices;
a price setting unit that sets a power price in power supply by each of the power supply devices based on the value of the power supply parameter in the power supply device; and
a price notification unit that notifies the vehicle of the set power price.

2. The server according to claim 1, wherein
the power supply reservation includes information on a scheduled time for power supply, and
the price setting unit sets the power price in the power supply by each of the power supply devices for each time zone.

3. The server according to claim 1 or 2, wherein the price setting unit sets the power price according to a power supply capability of the power supply device in addition to the scheduled supply power amount.

4. The server according to claim 1 or 2, wherein
the plurality of power supply devices are connected to one power supply source, and
the price setting unit sets the power price in a such a way that the same power price is applied to the plurality of power supply devices connected to the one power supply source.

5. The server according to any one of claims 1 to 4, wherein when the price notification unit receives an inquiry about the power price from the vehicle, the price notification unit transmits the power price to the vehicle.

6. The server according to any one of claims 1 to 4, wherein the price notification unit notifies the vehicle of a current power price at predetermined time intervals.

7. The server according to any one of claims 1 to 4, wherein the price notification unit notifies the vehicle of a current power price when the set power price changes by a predetermined value or more in at least a part of the power supply devices.

8. The server according to claim 7, wherein the price notification unit does not notify the vehicle of the current power price while the set power price changes by only less than the predetermined value in at least a part of the power supply devices.

9. The server according to any one of claims 1 to 8, wherein the power supply parameter that changes in relation to the scheduled supply power amount is a number of power supply reservations in each of the power supply devices.

10. The server according to any one of claims 1 to 9, wherein the power supply parameter that changes in relation to the scheduled supply power amount is a scheduled supply power amount calculated by the number of power supply reservations in each of the power supply devices and a required supply power amount in each power supply reservation.

11. The server according to any one of claims 1 to 10, wherein the price setting unit sets the power price in such a way that the larger the scheduled supply power amount indicated by the power supply parameter in each of the power supply devices, the higher the power price in the power supply device.

12. The server according to any one of claims 1 to 11, further comprising a cancellation cost notification unit that notifies, when receiving the power supply reservation from the vehicle and then receiving a request for cancellation of the power supply reservation from the vehicle, the vehicle of a cost associated with the cancellation.

13. A power supply system comprising:
the server according to any one of claims 1 to 12; and
a vehicle communicating with the server,
wherein the vehicle includes:
a route search unit that searches for a travel route to a destination,
a power price acquisition unit that acquires a power price in the power supply device in the travel route searched by the route search unit based on the power price transmitted from the server, and
a presentation unit that presents information on the power price in the power supply device in the searched travel route to a user of the vehicle.

14. The power supply system according to claim 13, further comprising a reservation transmission unit that transmits, to the server, a power supply reservation to the power supply device for which power supply is approved, when power supply in the power supply device is approved by the user as a result of presenting the information on the power price in the power supply device to the user of the vehicle.

15. The power supply system according to claim 13 or 14, further comprising a cancellation transmission unit that, when the power supply device that has already transmitted a power supply reservation is no longer included in the changed travel route as a result of the user changing the travel route, transmits, to the server, a request for cancellation of the power supply reservation to the power supply device that is no longer included in the travel route.

16. A power price setting method performed in a server connected to a plurality of power supply devices supplying a power to a vehicle and a plurality of the vehicles, the power price setting method comprising:
calculating a value of a power supply parameter that changes in relation to a scheduled supply power amount in each of the power supply devices based on a power supply reservation from each of the vehicles to each of the power supply devices;
setting a power price in power supply by the power supply device based on the value of the power supply parameter in each of the power supply devices; and
notifying the vehicle of the set power price.
